# EUROPEAN PATENT SPECIFICATION

(11) **EP 1 225 552 B1**
(45) Date of publication and mention of the grant of the patent: **03.11.2004**
(21) Application number: 01101123.6
(22) Date of filing: 19.01.2001
(51) Int. Cl.: G08G 1/0968

(54) **A method and system for referencing locations in transport telematics**
Verfahren und Vorrichtung für Referenzstandorte in der Transporttelematik
Méthode et système pour réferencer des lieux dans la télématique du transport

(43) Date of publication of application: 24.07.2002
(73) Proprietor: Siemens Aktiengesellschaft, 80333 München (DE)
(72) Inventor: Hendriks, Antonius, Jr., 5509 NR Veldhoven (NL)

(56) References cited:
- DE-A- 4 429 016
- US-A- 5 984 362

## Description

The invention relates to a method for referencing geographical locations that are used in a transport telematics context. Such locations should in an in-vehicle navigation unit be reconstructed in an accurate manner to allow navigating, route-finding, and other vehicle management operations that are based on informations relating the present vehicle position to the topology of the surrounding geography. A starting point will generally be constituted by map information that is available in the vehicle represented by a local version of the geographical map. Further map information may be provided by an offboard service provider through a broadcast, wireless short range, wired, or other communication organization, see for example DE-A-44 29 016. Such providing may in particular relate to recent changes that will have come up to the service provider. This will in particular signal traffic problems or other amendments to specific routes or parts thereof. However, the amount of information that should be transmitted by the service provider should be kept quite small, inasmuch as transmission capability is fairly limited, whilst the information should generally become available in the vehicle on short notice. More in particular therefore, the invention relates to a method for referencing locations that are used in a transport telematics context by effecting such referencing viz à viz an overall geographic context.

Now, according to the present invention, the indicating of such a path or route is most economically done through choosing only a small number of so-called ***pivot points.*** The eventual path connecting these points should have associated thereto the lowest cost metric in terms of travelling time, travelling distance, or another quantity, such as a hybrid of these two. The invention has recognized the great advantage that could in general be attained through minimizing the number of such pivot points, while any deviation from the optimum route should lead to a markedly inferior (i.e., generally higher) value for the associated metric. The pivot points will represent only a small fraction of the overall map information, so that communicating their informations will cause minimal communication transport load only.

In consequence, amongst other things, it is an object of the present invention to minimize communicating transport load through communicating only the necessary pivot point informations, in that substantially any deviation from a road segment indicated by a service provider would appreciably increase the cost metric of the path. This allows a ***robust procedure*** for the receiver party to decide on the optimum path. In many circumstances this allows to keep the number of points for which the informations should be transmitted at an unexpectedly low value.

Now therefore, according to one of its aspects the invention is characterized in that with respect to a first road segment designated by a service provider between two successive ***pivot points*** that are providing a minimum weighted distance therebetween, any second road segment that is a disjoint alternative to the whole or to a part of said first road segment is being assigned a weighted distance that is substantially greater than the weighted distance of said whole or part, respectively.

The invention also relates to a system arranged for implementing the above method, and furthermore to a service provider arrangement, to a vehicle arrangement, and to a vehicle adapted for implementing said method and system. Further advantageous aspects of the invention are recited in dependent Claims.

Advantageously, two successive pivot points are linked by a road segment that comprises a plurality of sequenced road junctions. The providing of the above robustness allows to code a road segment that has a plurality of road junctions as a short information string that nevertheless contains all necessary data.

Advantageously, for one or more classes of major roads the pivot points are located away from associated road junctions. This allows to avoid most uncertainties that may be caused by the extended geographical size of many road junctions associated to such major roads; in consequence, adjacent pivot point pairs may have a plurality of interposed junctions or transitions.

Advantageously, for one or more classes of local roads the pivot points are located substantially on intersections. Such local or generally, smaller roads, will generally not have the above junctions of extended size, and this manner of setting pivot points has been found very straightforward. The above uncertainty will hardly ever exist with such types of roads. Also here, adjacent pivot point pairs may have a plurality of interposed junctions or transitions

Advantageously, various functional road classes will get assigned a unique weight factor that increases stepwise for the next higher functional class. This allows an extremely expedient manner of calculating the cost metric.

Advantageously, such pivot point has a location code based on its geographical position, road direction angle, road type class, and a parallel lane indication. Although fairly minimal, this code definition has been found sufficient for unambiguous data processing.

Advantageously, a road segment location reference comprises an ordered sequence of one or more pivot point references, each pivot point reference comprising substantially all of: a pivot point location reference, a pivot-point-associated distance to a next pivot point, a pivot-point-associated distance to a next road type change and a new road type indication therefor, and a pivot-point-associated distance indication to a location termination. Although fairly minimal, this code definition has again been found sufficient for unambiguous data processing.

Advantageously, a pivot point is specified as lying within an enhanceable default area. The fixed-size default area has generally been sufficient for therein specifying the pivot point as being related to an associated road section. For certain situations, the enhancing or enlarging of the default area allows to still "hit" the associated road section.

These and further aspects and advantages of the invention will be discussed more in detail hereinafter with reference to the disclosure of preferred embodiments, and in particular with reference to the appended Figures that show:
Figure 1, an overview of a vehicle located in an overall geographic context;
Figure 2, an example road situation with four physically separated and parallel lanes;
Figure 3, an illustration of the assigning of a weighted distance;
Figure 4, an elementary location reference;
Figure 5, another elementary location reference;
Figure 6, still another elementary location reference;
Figures 7a ,7b, two operational flow charts according to the present invention;
Table 1, a preferred set of Distance Weight Factors for Location Referencing Decoding.

The concept of the referencing to so-called ***pivot points*** according to the present invention is concerned with accurately reconstructing location references in a vehicle navigation unit from their presentation by an offboard service provider that may possibly be using a different map from the in-vehicle navigation unit, whilst still allowing to operate the system with minimum communication costs.

For anchoring geographical locations across map differences, the pivot points will be chosen at locations where ambiguity between the two map organizations should be minimal. On highway or motorway road segments they will generally be chosen halfway between successively chosen road intersections, rather than at an intersection itself. Experience has shown indeed that this procedure will substantially mitigate any ambiguity, in that the pinpointing of the coordinates of a large intersection area will be subject to great variability or ambiguity between various map providers. Subsequently to the setting of the pivot points, the topology or connectivity pattern of the road network is employed to arrive at a compact but extremely robust reference pattern for the road segment or segments connecting such pivot points.

The concept for referencing pivot point locations is to describe such location references by a set of communicated indicators, such as pivot points, distances and road classes, in combination with a set of mandatory rules and optional guidelines. Through applying these, the vehicle navigation unit should be able to reconstruct the location reference from the set of indicators.

Any general location referencing concept must compensate for differences that may exist between the map version at the service provider and the map version on board of the navigation unit. Generally, the two versions need not be fully uniform through coding differences or through changes that have been effected in the course of time. Various discrepancies may be caused by things such as:
- absent roads or absent exits from major roads
- the varying use of exonyms for particular road names, such as in a bilingual environment
- differences in digitizing, such as in road centerline offsets, the number of unconnected lanes, or in road lengths
- differences in the road classifications, through interpretation differences or even outright errors
- changes due to road upgrading or downgrading, changes in the geometry of a junction, or the temporary execution of repair or other works.

The present invention proposes a method, system and subsystem organization for overcoming the above uncertainties by the selection and design of a minimal yet sufficient number of indicators, rules, and guidelines to ensure robust and accurate location reference reconstruction in the face of appreciable map differences between the service provider and the in-vehicle navigation unit.

Prior art has undertaken various approaches to such location referencing, such as in the publication GOODLANE, An Approach to Location Referencing for Telematic Applications, C. Hahlweg et al, ITS Torino 2000 (D1), and in the publication Improved On-the-fly Location Referencing, K. Wevers, ITS Torino 2000 (D2).

Of these, D1 undertakes location referencing through using ***objects*** of dimension 0 (i.e., a point) as well as of dimension 1 (i.e., a road segment) whilst undertaking the referencing to point to objects outside the network, and furthermore determining points on a known road and also determining further one-dimensional objects. Furthermore, a data format is proposed, but due to the more complex structure of the set of objects versus those of the present invention, the present inventor believes that the transmission load for the prior art scheme would be much higher than that of the present invention with its pivot point construction. In particular, D1 will communicate much more geometric information.

Next, reference D2 undertakes another referencing scheme, that will code ***road sections*** rather than intersections. However, the starting ground for such a section code will still be the coordinate pair of the first bounding intersection, and the uncompacted code for a road section will contain some 39 bytes of information, thereby offering a marked improvement on the 62 bytes necessary for two concatenated ILOC codes of a still earlier model. The reference expects that compacting of the information will reduce its total size for a road section to less than 14 bytes, although the exact procedure has not been proposed in D2. Accordingly, the inventor believes that the pivot point-based operation of the present invention, combined with the robustness of determining the optimum and the allowing of a plurality of junctions between adjacent pivot points will keep advantageous merits over the prior art D2 as well as over D1.

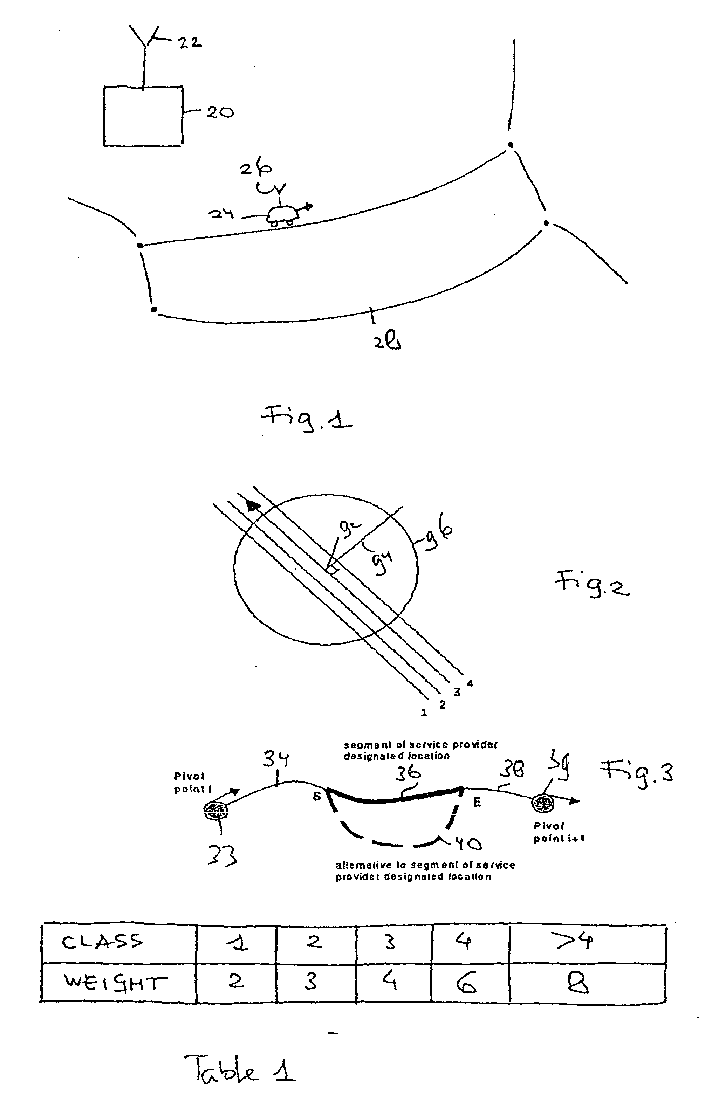

Figure 1 illustrates an overview of a motor vehicle located in an overall geographic context. Here, a service provider station 20 with transmitter means 22 is broadcasting certain telematic information to vehicle 24 that has been provided with receiver means 26. The vehicle is travelling along a road network that has succinctly been indicated as 28. In this representation, only junctions and edges of the network have been shown. In a real-life context, various types of road in several classes, as well as junctions of various levels of complexity will be present. For simplicity, the picture has been presented in this elementary form. Alternatively, the communication may proceed by short-range wireless or even wired transmission. In principle, the service provider could provide the whole or part of its information through other means, such as through providing removable data carriers such as floppy discs. Certain parts of the advantages of the invention could still apply in that case.

Now, for planning a journey, the in-vehicle navigation system (not shown) will first determine the actual vehicle position and will furthermore receive a destination position from a user, and will then access an in-vehicle map for calculating the optimum route. Various changes may be known to the service provider that could mandate or suggest amending a route that would be based on only the in-vehicle map. The service provider will transmit such changes, that may imply that certain routes or parts are unavailable or may only be used with difficulty, such as in that one of a plurality of parallel lanes is out of service. The information of such transmission should be kept low, however. The in-vehicle system will consider the changes in a particular region of interest, update its map information, and execute the above calculating as based on the amended map. The updating may be necessary only once, such as in view of repair works. Alternatively, the updating may be effected in a dynamic manner, through the developing and/or solving of traffic jams, accidents, and the like.

Figure 2 illustrates an exemplary road situation with four physically separated parallel lanes 1-4. In the presently preferred embodiment, the actual location 92 will be determined through a parallel lane indicator that will be provided with the following fields:
- a ***parallel lane sequence number*** indicates the sequence number of the lane in question;
- a ***number of lanes*** indicates the total number of parallel lanes for which all other constraints regarding pivot points will have been met within a (default) search area. Preferably, the counting proceeds according to a clockwise angle of 90° (94) with respect to the direction of the road itself.
- a ***search area enhancement*** indicates by how much the default search area of 150 meters may be enlarged to an actual search area (96) to find the correct road. In the example, the coding is as follows: the lane sequence number is =3, the number of parallel lanes =4, the search area enhancement is set at +50 meters. The shape of the search area may be a circle, a square, or other.

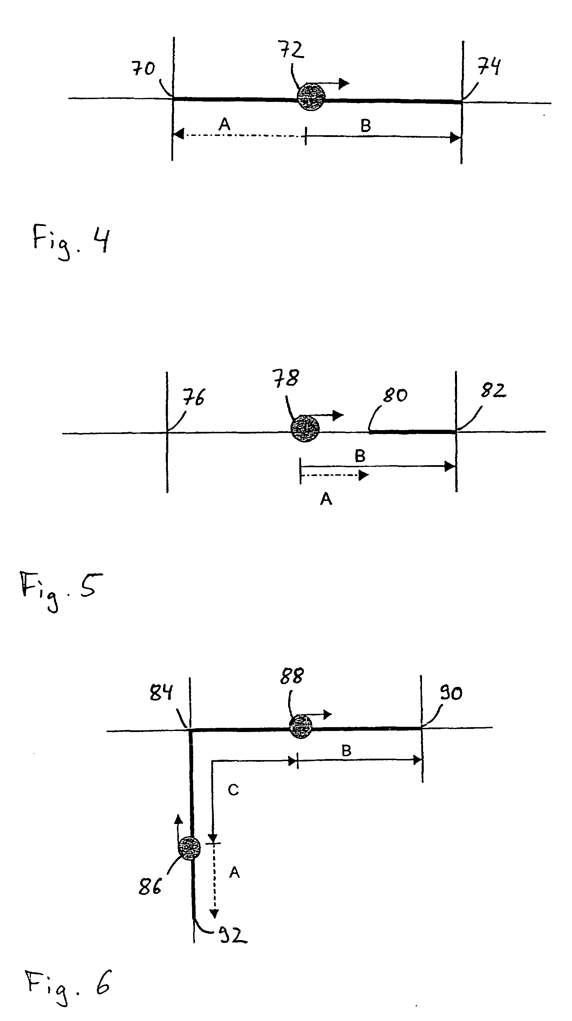

Figure 3 illustrates the assigning of a weighted distance to a segment of a location designated by a service-provider. As shown, the segment in question runs between two consecutive pivot points numbered #i and #i+1. The segment consists of three concatenated parts 34, 36 and 38. The transition between two such parts may be a road junction, a transition to a new road class, or other. The number of concatenated parts may be lower, but for attaining optimum communication efficiency, it should be as high as feasible, which could indeed be much higher than in the elementary arrangement of the Figure. Furthermore, there is an alternative in the form of part 40 that may be used in lieu of the part 36 designated by the service provider. Now, if the on-board unit is allowed to execute the vehicle management on a stand-alone basis, as has been customary for vehicle navigation and other purposes, the part 40 may with a certain probability be chosen for traversal instead of the part 36. The unpredictability regarding the choosing of such unpreferred part may be caused by the fact that certain negative factors may bias the navigating ***against*** choosing part 36. Such bias could be effected in that part 40 is geographically shorter, has a higher road classification (i.e. representing a "bigger" road), or through some other cause. Note that in this respect, the service provider map and the in-vehicle map may be different from each other. To compel, or at least strongly bias the system to choose part 36 indeed, would in effect necessitate the transmitting of a higher number of pivot points to completely fix the proposed road. According to a particularly advantageous aspect of the present invention, the alternative part 40 will now get assigned a substantially higher weighted distance than the standard part 36, the weighted distance being conceptualized as the real distance multiplied by a weight factor. However, other concepts concerning the weighted distance would be equally viable. The percentage of the increase should be substantial, and the preferred amount is at present at least +25%. In certain circumstances, a another increase could be better, such as +20% or more, or +30% or more, or even +40%, +50%, or the like, depending on the complexity of the road network, the general road classification of the principal provider-designated location, or other factors. The above compelling or biasing is now effected without the necessity for greatly increasing the number of pivot points.

In this respect, Table 1 gives a preferred set of Distance Weight Factors for Location Referencing Decoding purposes. The roads have gotten assigned a functional class number. For example, Class 1 applies to Highways or Motorways with separate lanes and extra emergency lanes, whereas a road for mixed traffic with only two joined lanes and a 30 miles per hour speed limit will get a much higher classifiaction such as Class 4. Class 5 has been standardized as a "low mobility" road, whereas class 6 is a "limited access road", such as one lying on private premises. For the purposes of this embodiment, there are only five classes, inasmuch as classes greater than #4 have been joined to a single class. Furthermore, each Road Class has an associated ***weight factor*** that for reasons of simplicity has been expressed as an integer value, which however should not be construed as a limitation. It is clear that for each next class the weight factor increases by at least 33%. It should now be evident that in Figure 3 the alternative part 40 should get a cost metric that is substantially higher than that of the preferred part 36. Such could be effected through a higher road class, through greater length, or through other measures that would raise the cost metric value. The class stepping could be between Classes 2 and 3, between 4 and 5, or other. Alone or in combination, other factors leading to the value of the cost metric could bring about the substantial step of the increase in the cost metric between parts 36 and 40. This feature will generally eliminate any unwanted positive bias that could lead to the selecting of part 40 for the navigation.

Figure 4 illustrates an elementary location reference. Only a single pivot point 72 is used which is associated to a "positive" direction as indicated by the arrow, and which has been set halfway between the ends 70, 74 of the street in question. Two distances A, B mark the extent of the street 70-74. Distance A to end 70 has a negative value, whereas distance B to end 74 has a positive value. Therefore, a single street has been sufficiently referenced by putting a single pivot point thereon.

Figure 5 illustrates another elementary location reference, that refers to only a part 80-82 of a particular street 76-82. Only a single pivot point 78, with associated "positive" direction is needed, whereas two distances A, B, mark the extent of the location. The pivot point 78 has been set halfway between ends 76, 78 of the street in question, and itself is not part of the location 80-82 in this example. Both distances A, B have positive values here.Therefore, a part of a single street has been referenced through an intermediate pivot point positioned on said street "outside" said part. Of course, "inside" would be feasible as well.

Figure 6 illustrates still another elementary location reference, that spans two intersecting roads 84-90, and 84-92. In this case two pivot points 86, 88 with associated "positive" directions have been used that are located at a relative distance C. Pivot point 88 has been set halfway between ends 84, 90. Pivot point 86 has been set in the same manner, although only one end 84 of the street in question has been indicated. The extent of the location 92-90 past the two pivot points 86, 88 is given again by both distances A and B. Figures 4 to 6 have so far discussed the setting of a pivot point to substantially the mid-point between two intersections. This would appear to be an advantageous choice to use for all road segments. Therefore, concatenated parts of two joining streets have been referenced through a pivot point located on either street inside said parts. Again, "outside" would be feasible as well. In similar manner as in Figure 6, a concatenation of more than two streets may be coded through the providing of only ***two*** pivot points, as will be discussed further hereinafter.

Now, in Figures 4 through 6, the pivot points have been provided halfway between neighbouring road junctions. In the first place, a particular road segment may have such shape that it would be more advantageous to have the pivot point away from the midpoint. Another, discrete feasible partial alternative for the "pivot point halfway" is to use for certain Road Classes the intersections themselves. This could in Table 1 apply to all Roads of Classes 4 or higher, or to another selection, or to what would commonly be termed "local" roads. Highways and the like would then still have the setting of the pivot points according to Figures 4-6. The rationale for having a different pivot point setting policy for these local roads is that their junctions are often of a very elementary character, such as just a crossing, without any further complications in the form of specific diverging lanes and the like. It has been found that the usability of such elementary junctions in a traffic jam context is generally all-or-nothing.

Next to the above, various particular aspects of the preferred embodiments of the present invention are well worth noting. In the first place, the transmitting of information defining a road segment is based on signalling a string of pivot points. In particular, such road segment location reference comprises an ordered sequence of one or more pivot point references, each pivot point reference comprising substantially all of a pivot point location reference, a pivot-point-associated distance to a next pivot point, a pivot-point-associated distance to a next road type change and a new road type indication therefor, and a pivot-point-associated distance indication to a location termination. With respect to the disclosure of Figures 4 to 6, the sequence of pivot points will have the various aspects pertaining to the pivot points shown, in combination with the indicating of the various changes caused by the new roads, and/or the termination of a location.

The coding of a string of parts may be immediate, in that each transition is coded separately through giving its distance from a predecessor. This represents an extremely robust procedure. Another scheme is to give the length times weigh products for the transitions, which may even be given as intermediate sums. This scheme is somewhat less robust, but more efficient indeed.

For a multi-lane environment the pivot point may be specified as lying within an enhanceable default area. A linear default size of some 150 meters, such as a diameter or a diagonal may be sufficient, that may be extended for particularly large-scale situations. Certain regions could get a larger default, if road spacing is traditionally wider there. Also making a default area smaller, or "shrinking" it could be useful.

Generally, substantially any and all administrative, built-up, area, or point-of-interest locations are excluded from being associated to any pivot point. This would obviously diminish the information tranport load appreciably. Moreover, these types of locations would need all kinds of supplementary informations for complete characterization, whereas their usefulness for route planning is relatively limited.

On the other hand, the typing of pivot points in various types could be advantageous, such as the inherent typing of "halfway" pivot points versus "intersection" pivot points. Various other types of pivot points could be discriminated further for sophisticated compacting of the code to be transmitted. Also, the typing of road segments could be a further advantageous feature. Such typing could relate to the character of the road itself, or the combined coding of aspects that for a particular road or roads would often go combined. Another example of such typing is a generalization of the "classes" discussed earlier. In general, various different cost metric types could prove useful.

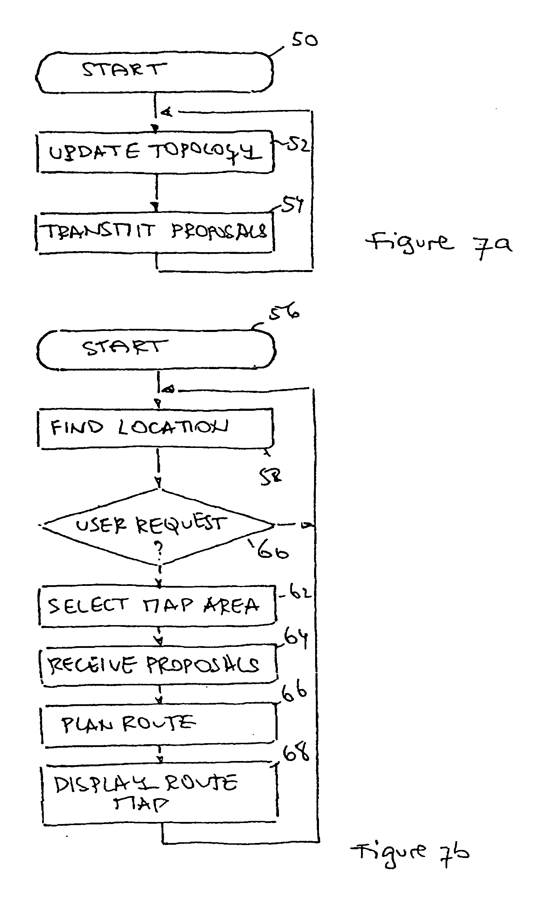

Figures 7a, 7b illustrate two operational flow charts according to the present invention. Of these, Figure 7a applies to the service provider subsystem. In block 50, the operation is started, and the necessary hardware and software facilities are assigned. In block 52, the topology of the network is updated, such as through the reading of a list of applicable traffic jams that have been signalled either by some automatic detection system, or have been input by an operator person. Other kinds of amendments would be input into the topology in similarly advantageous manners. Next to negative changes that would relate to possible deterioration of the road network performance, such as the blocking of a road, also positive changes could occur, such as the adding of a new lane or a termination of a traffic jam. After having effected the updating, the service provider subsystem makes up an ordered list for transmission, wherein the pivot points that have changed parameters will have their codings transmitted according to some predetermined sequence; this sequence inter alia contains proposed roads, such as those that have a "good" level of usage, whereas others have a "less good" level of usage, through excessive or jammed traffic, adverse conditions of weather, repair works, or through other aspects. In block 54, the proposals, amendments, and possibly other information will be transmitted. Next, the system reverts to block 52. For convenience, various other aspects have not been shown in the Figure, such as the terminating of the operation.

Figure 7b illustrates a flow chart that applies to the in-vehicle system. In block 56, the operation is started, and the necessary hardware and software facilities are assigned. In block 58, the actual location of the vehicle is determined according to known procedures. In block 60 the system will detect the occurrence of a user request, such as requesting the finding of a route from the actual position of the vehicle to a destination location. In block 62, the appropriate map area is selected, such as a large-scale region that comprises both the actual position (origin) and the user-selected destination. In block 64, the in-vehicle system will scan the broadcasting by the service provider for any proposals by the provider that would be relevant within the actual large scale region selected in block 62. In block 66, the in-vehicle system will on the basis of the originally present information, such as the in-vehicle map, the user requests (go to B), and the proposals from the service provider, execute the planning of the route. In block 68, the route or any information that would be appropriate in respect of the user request from block 60 is displayed on a display screen not shown in the drawings for simplicity. Next, the system goes back to block 58. For convenience, various other aspects have not been shown in the Figure, such as the terminating of the operation.

Hereinafter, a specific preferred embodiment will be presented regarding the coding of pivot point location references in a GATS style ADP format. The various abbreviations herein will be familiar to persons skilled in the art. The minimal style segment location with **N** pivot points will have **20+N*73 bits**. For every pivot point where the path has **M** road type changes, this adds **7+M*14 bits**. For every pivot point that needs a parallel lane indicator this adds **16 bits**.

Now, segment location referencing proceeds as follows (MF indicates Mandatory Fixed size element, OF Optionally Fixed size element):

| **Information element** | | **Type** | **Bitlength** | **Comment** |
|---|---|---|---|---|
| Sign distance beyond | | | | |
| first pivot point | MF | 1 | | 0 positive/1 negative |
| Distance beyond/before | | | | |
| first pivot point | MF | 10 | | |
| Sign distance beyond | | | | |
| last pivot point | MF | 1 | | 0 positive/1 negative |
| Number of pivot points | MF | 8 | | Maximum 255 |
| Pivot point #1, #2, etc. | | | | OV Variable |

The defining of a single pivot point needs a variable number of bits, as follows:

| **Information element** | | **Type** | **Bitlength** | **Comment** |
|---|---|---|---|---|
| Location of pivot point | | | | MV Variable |
| Distance to next | | | | |
| pivot point | MF | 10 | | |
| Road type change flag | MF | 1 | | Signals road type info |
| Number of road type | | | | |
| changes | | OF | 7 | Maximum 127 |
| Distance to next road | | | | |
| type change #1, #2, etc. | OF | 10 | | |
| Road type | | OF | 4 | GDF functional |
| class | | | | |

A pivot point is described by its geographical location, and optionally by a direction

| **Information element** | | **Type** | **Bitlength** | **Comment** |
|---|---|---|---|---|
| Directed point | | MF | 61 | |
| Parallel lane | | | | |
| indicator flag | MF | 1 | | Signals next 3 elements |
| Street number | | OF | 4 | 0-16 |
| Number of streets | | OF | 4 | 0-16 |
| Search area | OF | 4 | | discrete in-/decrease steps |

The above preferred embodiments of the present invention have been given by way of illustration and explanation only. Persons skilled in the art will be able to make various changes and amendments thereto, all of which being covered by the appended Claims, inasfar as they would be covered by the scope of such Claims.

## Claims

1. A method for referencing locations that are used in a transport telematics context by effecting such referencing viz à viz an overall geographic context (28), **characterized in that** with respect to a first road segment (34, 36, 38) designated by a service provider between two successive ***pivot points*** (33, 39) that are providing a minimum weighted distance therebetween, any second road segment (40) that is a disjoint alternative to the whole or to a part (36) of said first road segment (34, 36, 38) is being assigned a weighted distance that is substantially greater than the weighted distance of said whole or part, respectively.

2. A method as claimed in Claim 1, **characterized in that** two successive pivot points are linked by a road segment that comprises a plurality of sequenced road junctions.

3. A method as claimed in Claim 1, **characterized in that** such geographic context is based on providing a set of pivot points (72, 78, 86, 88) that for one or more classes of major roads are located away from adjacent road junctions.

4. A method as claimed in Claim 3, **characterized in that** such pivot point will be provided substantially halfway between applicable road junctions.

5. A method as claimed in Claim 3, **characterized in that** such set of pivot points comprises further pivot points that for one or more classes of local roads are located substantially on intersections.

6. A method as claimed in Claim 3, **characterized in that** each functional road class has a unique weight factor that increases stepwise for the next higher functional class.

7. A method as claimed in Claim 1, **characterized in that** such pivot point has a location code based on its geographical position, a road direction angle, a functional road class, and a parallel lane indicator.

8. A method as claimed in Claim 7, **characterized in that** the parallel lane indicator comprises a parallel lane sequence number, a number-of-lanes integer, and a search area enhancement quantity.

9. A method as claimed in Claim 1, **characterized in that** a road segment location reference comprises an ordered sequence of one or more pivot point references, each pivot point reference comprising substantially all of a pivot point location reference, a pivot-point-associated distance to a next pivot point, a pivot-point-associated distance to a next functional road class change and a new functional road class indication therefor, and a pivot-point-associated distance indication to a location termination.

10. A method as claimed in Claim 1, **characterized by** specifying a pivot point as lying within an enhanceable or shrinkable default area.

11. A method as claimed in Claim 1, **characterized by** referencing a single street (70-74) through an intermediate single pivot point (72) positioned thereon.

12. A method as claimed in Claim 1, **characterized by** referencing a part (80-82) of a single street (76-82) through an intermediate pivot point (78) positioned on said street (76-82) inside or outside said part.

13. A method as claimed in Claim 1, **characterized by** referencing concatenated parts (92-84, 84-90) of two joining streets through a pivot point (86, 88) located on either street inside or outside said parts.

14. A method as claimed in Claim 1, **characterized by** substantially excluding administrative, built-up, area, or point-of-interest locations from associating to any pivot point.

15. A method as claimed in Claim 1, **characterized by** including pivot point typing.

16. A method as claimed in Claim 1, **characterized by** furthermore including road segment typing, such including allowing the use of various different cost metric types.

17. A system being arranged for referencing locations that are used in a transport telematics context viz à viz an overall geographic context (28), **characterized by** having service provider designation means for with respect to a first road segment (34, 36, 38) between two successive pivot points (33, 39) assigning a minimum weighted distance therebetween, whilst assigning to any second road segment (40) that is a disjoint alternative to the whole or a part (36) of said first road segment (34, 36, 38) a weighted distance that is substantially greater than the weighted distance of said whole or part.

18. A system as claimed in Claim 17, **characterized in that** two successive pivot points are linked by a road segment that comprises a plurality of sequenced road junctions.

19. A system as claimed in Claim 17, **characterized in that** such designation means are arranged for in such geographic context providing a set of pivot points (72, 78, 86, 88) that for one or more classes of major roads are located away from adjacent road junctions.

20. A system as claimed in Claim 19, **characterized in that** such pivot point will be provided substantially halfway between applicable road junctions.

21. A system as claimed in Claim 19, **characterized in that** such set of pivot points will comprise further pivot points that for one or more classes of local roads are located substantially on intersections.

22. A system as claimed in Claim 19, **characterized in that** each functional road class will have a unique weight factor that increases stepwise for the next higher functional class.

23. A system as claimed in Claim 17, **characterized in that** such pivot point will have a location code based on its geographical position, a road direction angle, a road type class, an a parallel lane indicator.

24. A system as claimed in Claim 23, **characterized in that** the parallel lane indicator comprises a parallel lane sequence number, a number-of-lanes integer, and a search area enhancement quantity.

25. A system as claimed in Claim 17, **characterized in that** a road segment location reference comprises an ordered sequence of one or more pivot point references, each pivot point reference comprising substantially all of a pivot point location reference, a pivot-point-associated distance to a next pivot point, a pivot-point-associated distance to a next road type change and a new road type indication therefor, and a pivot-point-associated distance indication to a location termination.

26. A system as claimed in Claim 17, **characterized by** specifying a pivot point as lying within an enhanceable or shrinkable default area.

27. A service provider arrangement **characterized in that** it is adapted for operating as a service provider in a system as claimed in Claim 17.

28. A vehicle arrangement **characterized in that** it is adapted for operating as a receiver device in a system as claimed in Claim 17.

29. A vehicle provided with a vehicle arrangement as claimed in Claim 28.

## Patentansprüche

1. Verfahren zum Referenzieren von Orten, die in einem Transporttelematikkontext verwendet werden, indem ein derartiges Referenzieren gegenüber einem insgesamt geographischen Kontext (28) bewirkt wird, **dadurch gekennzeichnet, daß** bezüglich eines von einem Service-Provider bereitgestellten ersten Straßensegments (34, 36, 38) zwischen zwei aufeinanderfolgenden *Drehpunkten* (33, 39), die dazwischen eine kleinste gewichtete Entfernung bereitstellen, jedem zweiten Straßensegment (40), das eine disjunkte Alternative zu dem ganzen ersten Straßensegment (34, 36, 38) oder einem Teil (36) davon ist, eine gewichtete Entfernung zugeordnet wird, die wesentlich größer ist als die gewichtete Entfernung des ganzen beziehungsweise des Teils.

2. Verfahren nach Anspruch 1, **dadurch gekennzeichnet, daß** zwei aufeinanderfolgende Drehpunkte durch ein Straßensegment verbunden werden, das mehrere aufgereihte Straßenabzweigungen umfaßt.

3. Verfahren nach Anspruch 1, **dadurch gekennzeichnet, daß** ein derartiger geographischer Kontext auf der Bereitstellung eines Satzes von Drehpunkten (72, 78, 86, 88) basiert, die für eine oder mehrere Klassen von Hauptstraßen von benachbarten Straßenabzweigungen entfernt angeordnet sind.

4. Verfahren nach Anspruch 3, **dadurch gekennzeichnet, daß** ein derartiger Drehpunkt im wesentlichen in der Mitte zwischen verwendbaren Straßenabzweigungen bereitgestellt wird.

5. Verfahren nach Anspruch 3, **dadurch gekennzeichnet, daß** ein derartiger Satz von Drehpunkten weitere Drehpunkte umfaßt, die für eine oder mehrere Klassen von Ortsstraßen im wesentlichen an Kreuzungen angeordnet sind.

6. Verfahren nach Anspruch 3, **dadurch gekennzeichnet, daß** jede funktionelle Straßenklasse einen eindeutigen Gewichtsfaktor aufweist, der für die nächst höhere funktionelle Klasse stufenweise zunimmt.

7. Verfahren nach Anspruch 1, **dadurch gekennzeichnet, daß** ein derartiger Drehpunkt einen Ortscode aufweist, der auf seiner geographischen Position, einem Straßenrichtungswinkel, einer funktionellen Straßenklasse und einem Parallelspuranzeiger basiert.

8. Verfahren nach Anspruch 7, **dadurch gekennzeichnet, daß** der Parallelspuranzeiger eine Parallelspursequenzzahl, eine ganzzahlige Spurenzahl und eine Suchbereichsvergrößerungsgröße umfaßt.

9. Verfahren nach Anspruch 1, **dadurch gekennzeichnet, daß** eine Straßensegmentortsreferenz eine geordnete Sequenz einer oder mehrerer Drehpunktreferenzen umfaßt, wobei jede Drehpunktreferenz im wesentlichen alle folgenden umfaßt: eine Drehpunktortsreferenz, eine drehpunktbezogene Entfernung zu einem nächsten Drehpunkt, eine drehpunktbezogene Entfernung zu einer nächsten funktionellen Straßenklassenänderung und eine neue funktionelle Straßenklassenanzeige dafür und eine drehpunktbezogene Entfernungsangabe zu einem Ortsabschluß.

10. Verfahren nach Anspruch 1, **gekennzeichnet dadurch, daß** ein Drehpunkt so spezifiziert wird, daß er in einem vergrößerbaren oder schrumpfbaren Standardbereich liegt.

11. Verfahren nach Anspruch 1, **gekennzeichnet durch** das Referenzieren einer einzelnen Straße (70-74) **durch** einen daran positionierten einzelnen Zwischendrehpunkt (72).

12. Verfahren nach Anspruch 1, **gekennzeichnet durch** das Referenzieren eines Teils (80-82) einer einzelnen Straße (76-82) **durch** einen Zwischendrehpunkt (78), der auf der Straße (76-82) innerhalb oder außerhalb des Teils positioniert ist.

13. Verfahren nach Anspruch 1, **gekennzeichnet durch** das Referenzieren verketteter Teile (92-84, 84-90) von zwei ineinander übergehenden Straßen **durch** einen auf beiden Straßen innerhalb oder außerhalb der Teile angeordneten Drehpunkt (86, 88).

14. Verfahren nach Anspruch 1, **gekennzeichnet dadurch, daß** administrative oder Point-of-Interest-Stellen oder Stellen hinsichtlich geschlossener Ortschaften im wesentlichen davon ausgeschlossen werden, irgendeinem Drehpunkt zugeordnet zu werden.

15. Verfahren nach Anspruch 1, **gekennzeichnet durch** das Aufnehmen einer Drehpunkttypisierung.

16. Verfahren nach Anspruch 1, **gekennzeichnet durch** das weitere Aufnehmen von Straßensegmenttypisierung, wobei dies beinhaltet, die Verwendung verschiedener unterschiedlicher Kostenmetriktypen zu gestatten.

17. System, das ausgelegt ist für das Referenzieren von Orten, die in einem Transporttelematikkontext gegenüber einem insgesamt geographischen Kontext (28) verwendet werden, **gekennzeichnet dadurch, daß** es Service-Provider-Bezeichnungsmittel aufweist, um bezüglich eines ersten Straßensegments (34, 36, 38) zwischen zwei aufeinanderfolgenden Drehpunkten (33, 39) dazwischen eine kleinste gewichtete Entfernung zuzuordnen, während einem beliebigen zweiten Straßensegment (40), das eine disjunkte Alternative zu dem ganzen ersten Straßensegment (34, 36, 38) oder einem Teil (36) davon darstellt, eine gewichtete Entfernung zugeordnet wird, die wesentlich größer ist als die gewichtete Entfernung des ganzen oder des Teils.

18. System nach Anspruch 17, **dadurch gekennzeichnet, daß** zwei aufeinanderfolgende Drehpunkte durch ein Straßensegment verbunden werden, das mehrere aufgereihte Straßenabzweigungen umfaßt.

19. System nach Anspruch 17, **dadurch gekennzeichnet, daß** derartige Bezeichnungsmittel dafür ausgelegt sind, um in einem derartigen geographischen Kontext einen Satz von Drehpunkten (72, 78, 86, 88) bereitzustellen, die für eine oder mehrere Klassen von Hauptstraßen von benachbarten Straßenabzweigungen entfernt angeordnet sind.

20. System nach Anspruch 19, **dadurch gekennzeichnet, daß** ein derartiger Drehpunkt im wesentlichen in der Mitte zwischen verwendbaren Straßenabzweigungen bereitgestellt wird.

21. System nach Anspruch 19, **dadurch gekennzeichnet, daß** ein derartiger Satz von Straßenpunkten weitere Drehpunkte umfaßt, die für eine oder mehrere Klassen von Ortsstraßen im wesentlichen an Kreuzungen angeordnet sind.

22. System nach Anspruch 19, **dadurch gekennzeichnet, daß** jede funktionelle Straßenklasse einen eindeutigen Gewichtsfaktor aufweist, der für die nächst höhere funktionelle Klasse stufenweise zunimmt.

23. System nach Anspruch 17, **dadurch gekennzeichnet, daß** ein derartiger Drehpunkt einen Ortscode aufweist, der auf seiner geographischen Position, einem Straßenrichtungswinkel, einer funktionellen Straßenklasse und einem Parallelspuranzeiger basiert.

24. System nach Anspruch 23, **dadurch gekennzeichnet, daß** der Parallelspuranzeiger eine Parallelspursequenzzahl, eine ganzzahlige Spurenzahl und eine Suchbereichsvergrößerungsgröße umfaßt.

25. System nach Anspruch 17, **dadurch gekennzeichnet, daß** eine Straßensegmentortsreferenz eine geordnete Sequenz einer oder mehrerer Drehpunktreferenzen umfaßt, wobei jede Drehpunktreferenz im wesentlichen alle folgenden umfaßt: eine Drehpunktortsreferenz, eine drehpunktbezogene Entfernung zu einem nächsten Drehpunkt, eine drehpunktbezogene Entfernung zu einer nächsten Straßentypänderung und eine neue Straßentypanzeige dafür und eine drehpunktbezogene Entfernungsangabe zu einem Ortsabschluß.

26. System nach Anspruch 17, **gekennzeichnet dadurch, daß** ein Drehpunkt so spezifiziert wird, daß er in einem vergrößerbaren oder schrumpfbaren Standardbereich liegt.

27. Service-Provider-Anordnung, **dadurch gekennzeichnet, daß** sie dafür ausgelegt ist, als ein Service-Provider in einem System nach Anspruch 17 zu arbeiten.

28. Fahrzeuganordnung, **dadurch gekennzeichnet, daß** sie dafür ausgelegt ist, als eine Empfängereinrichtung in einem System nach Anspruch 17 zu arbeiten.

29. Fahrzeug, daß mit einer Fahrzeuganordnung nach Anspruch 28 ausgestattet ist.

## Revendications

1. Méthode pour référencer des lieux utilisés dans un contexte de télématique du transport en effectuant ce référencement vis-à-vis d'un contexte géographique global (28), **caractérisée en ce que** par rapport à un premier segment de route (34, 36, 38) désigné par un fournisseur de services entre deux ***points de pivotement*** (33, 39) successifs, qui donnent une distance pondérée minimale entre ceux-ci, tout second segment de route (40), qui est une alternative disjointe à la totalité ou à une partie (36) dudit premier segment de route (34, 36, 38), se voit attribuer une distance pondérée qui est sensiblement supérieure à la distance pondérée de ladite totalité ou partie respectivement.

2. Méthode telle que revendiquée à la revendication 1, **caractérisée en ce que** deux points de pivotement successifs sont reliés par un segment de route qui comprend une pluralité de carrefours routiers en séquence.

3. Méthode t elle que revendiquée à la revendication 1, **caractérisée en ce qu'**un tel contexte géographique est basé sur la mise à disposition d'un jeu de points de pivotement (72, 78, 86, 88) qui, pour une ou plusieurs catégories de grandes routes, sont situés à distance de carrefours routiers adjacents.

4. Méthode telle que revendiquée à la revendication 3, **caractérisée en ce qu'**un tel point de pivotement sera prévu sensiblement à mi-chemin entre des carrefours routiers applicables.

5. Méthode telle que revendiquée à la revendication 3, **caractérisée en ce qu'**un tel jeu de points de pivotement comprend des points de pivotement supplémentaires qui, pour une ou plusieurs catégories de routes locales, sont localisés sensiblement sur des intersections.

6. Méthode telle que revendiquée à la revendication 3, **caractérisée en ce que** chaque catégorie de routes fonctionnelle possède un facteur pondéral unique qui augmente progressivement pour la prochaine catégorie fonctionnelle supérieure.

7. Méthode telle que revendiquée à la revendication 1, **caractérisée en ce qu'**un tel point de pivotement possède un code de lieu basé sur sa position géographique, un angle directionnel de route, une catégorie de routes fonctionnelle et un indicateur de voie parallèle.

8. Méthode telle que revendiquée à la revendication 7, **caractérisée en ce que** l'indicateur de voie parallèle comprend un numéro de séquence de voies parallèles, un nombre entier de nombre de voies et une quantité d'amélioration de zones de recherche.

9. Méthode telle que revendiquée à la revendication 1, **caractérisée en ce qu'**une référence de lieu de segment de route comprend une séquence ordonnée de une ou de plusieurs références de point de pivotement, chaque référence de point de p ivotement comprenant sensiblement tout d'une référence de lieu de point de pivotement, une distance associée à un point de pivotement par rapport au prochain point de pivotement, une distance associée à un point de pivotement par rapport à un changement de catégorie de routes fonctionnelle suivante et une nouvelle indication de catégorie de route fonctionnelle à cet effet, et une indication de distance associée à un point de pivotement par rapport à une fin de lieu.

10. Méthode telle que revendiquée à la revendication 1, **caractérisée par** la définition d'un point de pivotement comme étant situé à l'intérieur d'une zone par défaut améliorable ou rétrécissable.

11. Méthode telle que revendiquée à la revendication 1, **caractérisée par** le référencement d'une rue unique (70-74) via un point de pivotement intermédiaire unique (72) positionné sur celle-ci.

12. Méthode telle que revendiquée à la revendication 1, **caractérisée par** le référencement d'une partie (80-82) d'une rue unique (76-82) via un point de pivotement intermédiaire (78) positionné sur ladite rue (76-82) à l'intérieur ou à l'extérieur de ladite partie.

13. Méthode telle que revendiquée à la revendication 1, **caractérisée par** le référencement de parties concaténées (92-84, 84-90) de deux rues de liaison via un point de pivotement (86, 88) situé sur l'une ou l'autre des rues à l'intérieur ou à l'extérieur desdites parties.

14. Méthode telle que revendiquée à la revendication 1, **caractérisée par** l'exclusion sensible de zones administratives, de zones construites ou de lieux présentant un point d'intérêt de l'association à un point de pivotement quelconque.

15. Méthode telle que revendiquée à la revendication 1, **caractérisée par** l'inclusion d'un typage de points de pivotement.

16. Méthode telle que revendiquée à la revendication 1, **caractérisée par** l'inclusion d'autre part d'un typage de segments de route, celui-ci incluant l'autorisation d'utiliser différents types de facteurs de coût.

17. Système disposé pour le référencement de lieux utilisés dans un contexte de télématique du transport vis-à-vis d'un contexte géographique global (28), **caractérisé par** la possession de moyens de désignation d'un fournisseur de services pour, par rapport à un premier segment de route (34, 36, 38), attribuer entre deux points de pivotement successifs (33, 39) une distance minimale pondérée entre eux, tout en attribuant à un second segment de route (40), qui est une alternative disjointe à la totalité ou à une partie (36) dudit premier segment de route (34, 36, 38), une distance pondérée qui est sensiblement supérieure à la distance pondérée de ladite totalité ou partie.

18. Système tel que revendiqué à la revendication 17, **caractérisé en ce que** deux points de pivotement successifs sont reliés par un segment de route qui comprend une pluralité de carrefours routiers en séquence.

19. Système tel que revendiqué à la revendication 17, **caractérisé en ce que** de tels moyens de désignation sont disposés pour prévoir dans un tel contexte géographique un jeu de points de pivotement (72, 78, 86, 88) qui, pour une ou plusieurs catégories de grandes routes, sont situés à distance de carrefours routiers adjacents.

20. Système tel que revendiqué à la revendication 19, **caractérisé en ce que** un tel point de pivotement sera prévu sensiblement à mi-chemin entre des carrefours routiers applicables.

21. Système tel que revendiqué à la revendication 19, **caractérisé en ce que** un tel jeu de points de pivotement comprendra des points de pivotement supplémentaires qui, pour une ou plusieurs catégories de routes locales, sont localisés sensiblement sur des intersections.

22. Système tel que revendiqué à la revendication 19, **caractérisé en ce que** chaque catégorie de routes fonctionnelle disposera d'un facteur pondéral unique qui augmente progressivement pour la prochaine catégorie fonctionnelle supérieure.

23. Système tel que revendiqué à la revendication 17, **caractérisé en ce que** un tel point de pivotement disposera d'un code de lieu basé sur sa position géographique, un angle directionnel de route, une catégorie de type de route et un indicateur de voie parallèle.

24. Système tel que revendiqué à la revendication 23, **caractérisé en ce que** l'indicateur de voie parallèle comprend un numéro de séquence de voie parallèle, un nombre entier de nombre de voies et une quantité d'amélioration de zone de recherche.

25. Système tel que revendiqué à la revendication 17, **caractérisé en ce que** une référence de lieu de segment de route comprend une séquence ordonnée constituée d'une ou de plusieurs références de points de pivotement, chaque référence de points de pivotement comprenant sensiblement tout d'une référence de lieu de points de pivotement, une distance associée à un point de pivotement par rapport au prochain point de pivotement, une distance associée à un point de pivotement par rapport à un changement de type de route suivante et une nouvelle indication de type de route à cet effet et une indication de distance associée à un point de pivotement par rapport à une fin de lieu.

26. Système tel que revendiqué à la revendication 17, **caractérisé par** la définition d'un point d e pivotement comme étant s itué à l'intérieur d'une zone par défaut améliorable ou rétrécissable.

27. Dispositif de fournisseur de services **caractérisé en ce qu'**il est adapté pour fonctionner comme fournisseur de services dans un système tel que revendiqué à la revendication 17.

28. Dispositif pour véhicule **caractérisé en ce qu'**il est adapté à fonctionner comme un récepteur dans un système tel que revendiqué à la revendication 17.

29. Véhicule pourvu d'un dispositif pour véhicules tel que revendiqué à la revendication 28.
